# EUROPEAN PATENT APPLICATION

(11) **EP 1 695 839 A1**
(43) Date of publication of application: **30.08.2006**
(21) Application number: 04819379.1
(22) Date of filing: 24.11.2004
(51) Int. Cl.: B41M 5/26, G11B 7/24, G11B 7/26

(54) **OPTICAL RECODING MEDIUM AND ITS MANUFACTURING METHOD, SPUTTERING TARGET, USAGE OF OPTICAL RECORDING MEDIUM, AND OPTICAL RECORDING/REPRODUCING APPARATUS**

(30) Priority: 28.11.2003 JP 2003398573; 11.12.2003 JP 2003413590
(71) Applicant: Ricoh Company, Ltd., Tokyo 143-8555 (JP)
(72) Inventor: MIURA, Hiroshi, Yokohama-shi, Kanagawa 224-0006 (JP); HARIGAYA, Makoto, 2591212 (JP); HIBINO, Eiko, Yokohama-shi, Kanagawa 224-0041 (JP); ITO, Kazunori;, Yokohama-shi, Kanagawa 224-0006 (JP)
(74) Representative: Barz, Peter
(86) International application number: PCT/JP2004/017426
(87) International publication number: WO 2005/051671

(57) **Abstract**

To provide an optical recording medium which has as much a storage capacity as DVD-ROMs and is capable of achieving reliable recording over a wide recording speed range of 1.0x to over 16x on DVD (recording linear velocities of about 3.5 m/s to over 56 m/s), a manufacturing method for the same, a sputtering target, a method for the use of an optical recording medium, and an optical recording/reproducing apparatus. The optical recording medium includes a substrate, first protective layer, recording layer, second protective layer and reflective layer, the first protective layer, recording layer, second protective layer and reflective layer being provided on the substrate in this order or in reverse order, wherein the recording layer comprises a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)).

## Description

### Technical Field

The present invention relates to an optical recording medium (hereinafter sometimes referred to as a "phase-change optical information recording medium," "phase-change optical recording medium," "optical information recording medium," or "information recording medium) capable of performing at least one of recording, reproducing, erasing and rewriting of information by irradiating a recording layer with a laser beam to cause optical change in the material constituting the recording layer; a method for manufacturing the optical recording medium; a sputtering target; a method for the use of an optical recording medium; and an optical recording /reproducing apparatus.

### Background Art

DVD+RWs, one of phase-change optical recording media, are rewritable recording media that are highly compatible with DVD+ROMs; DVD+RWs are standardized in "DVD+RW 4.7Gbytes Basic Format Specifications System Description" and have become commercially practical as storage media for motion pictures and as external storage medium used for personal computers. These phase-change recording media are ones that record and erase information by heating a recording layer provided on a substrate by irradiating it with a laser beam to switch the recording layer structure back and forth between crystalline and amorphous phases, changing the reflectivity.

Optical recording media capable of recording and reproducing information at higher speeds have been sought after, because the DVD-RW handles a large volume of data. Against this background, optical recording media capable of higher-speed recording have been developed.

For example, Patent Literature 1 proposes an optical recording medium capable of high-linear velocity recording (recording linear velocity of up to 8.5 m/s), which has been achieved by making improvements on an AgInSbTe-based recording materials used for CDs ― recording materials currently used for DVD+RWs.

This AgInSbTe-based recording materials are ones in which the content of Sb is increased compared to those for CD-RWs in order to support high-linear velocity recording. Materials with high Sb content have a problem that they show increased crystallization rates but reduced crystallization temperatures. Although it has been established that reduction in the crystallization temperature leads to poor storage reliability, problems associated with storage reliability are alleviated to an extent that no practical problems arise, by either increasing the content of Ag or adding a fifth element (e.g., Ge) to the recording material.

Too much increase in the content of Sb for higher-linear velocity recordings, however, finally causes the recording layer to be divided into two phases: Sb phase, and other elements' phase. Accordingly, the recording layer fails to function as a phase-change recording layer. Moreover, a maximum available recording speed is on the order of 20 m/s in terms of DVD's recording density.

In addition, Patent Literature 2 proposes an optical recording medium having a recording layer expressed by the general formula (In₁₋ₓSbₓ)_{1-Y}M_{Y} (where 55%≤X≤80%(by mass), 0%≤Y≤20%(by mass), and M represents at least one element selected from the group consisting of Au, Ag, Ge, and Bi).

Patent Literature 3 proposes an optical recording medium consisting of 20 atomic% to 60 atomic% of In and 40 atomic% to 80 atomic% of Sb, which records and erases information by irradiating the recording layer with light energy of different conditions to thereby selectively create two stable crystalline states.

However, sufficient studies have not been made on these optical recording media with regard to their applicability to high-density recording as in DVD-RAMs, DVD-RWs, etc. In addition, since the optical recording media utilize, in any case, differences in optical characteristics between different crystalline states for recording and erasing of information, sufficient optical contrast cannot be ensured between a recorded state and a non-recorded state.

Thus, optical recording media with increased density, capable of covering a wide recording speed range of 1.0x to over 16x on DVD (equivalent to recording linear velocities of about 3.5 m/s to over 56 m/s), and technologies associated with these media have not been provided; at present, further improvement and development are demanded.
Patent Literature 1 Japanese Patent Application Laid-Open (JP-A) No.2000-322740
Patent Literature 2 Japanese Patent Application Publication (JP-B) No.03-52651
Patent Literature 3 Japanese Patent Application Publication (JP-B) No.04-1933

### Disclosure of Invention

It is an object of the present invention to solve the conventional problems and, in response to the foregoing demand described above, to provide an optical recording medium with increased recording density, capable of recording over a wide recording speed range of 1.0x to over 16x on DVD (equivalent to recording linear velocities of about 3.5 m/s to over 56 m/s); a method for manufacturing the same; a sputtering target; a method for the use of an optical recording medium; and an optical recording/reproducing apparatus.

The present inventors have diligently conducted studies to solve the foregoing problems and have established the following: The addition of Cr or Si to an InSb-based material prevents reduction in the reflectivity of crystalline portions and can therefore eliminate problems associated with this reflectivity reduction. In addition, since both Cr and Si have capacity to increase the stability of the amorphous structure, it is also possible to increase the stability of amorphous marks. It is therefore made possible to provide a high-quality optical recoding medium with increased recording density, capable of recording over a wide recording speed range of 1.0x to over 16x on DVD (equivalent to recording linear velocities of about 3.5 m/s to over 56 m/s).

The present invention has been accomplished based on the findings by the present inventors. The followings are means for solving the foregoing problems.
<1> An optical recording medium comprising: a substrate; a first protective layer; a recording layer; a second protective layer; and a reflective layer, the first protective layer, the recording layer, the second protective layer and the reflective layer being disposed on the substrate in this order or in reverse order, wherein the recording layer comprises a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)).
   In the optical recording medium of the present invention the recording layer comprises the foregoing composition, allowing provision of an optical recording medium with increased density, which can cover a wide recording speed range of 1.0x to over 16x on DVD (equivalent to recording linear velocities of about 3.5 m/s to over 56 m/s).
<2> The optical recording medium according to <1>, wherein M represents at least one element selected from the group consisting of Ge, Al, Ag, Mn, Cu, Au and N.
<3> The optical recording medium according to one of <1> and <2>, wherein the recording layer comprises a composition expressed by the formula In_{α}Sb_{β}Si_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).
   In this optical recording medium Si is added to an InSb-based recording material, whereby reduction in the reflectivity of crystalline portions can be prevented and troubles associated with the reduction of reflectivity can be eliminated. Moreover, since Si increases the stability of the amorphous structure, the stability of amorphous marks can also be increased. Thus, it is possible to provide an optical recording medium with increased density, which can cover a wide recording speed range of 1.0x to over 16x on DVD (equivalent to recording linear velocities of about 3.5 m/s to over 56 m/s).
   The reason why the reduction in the reflectivity of crystalline portions can be prevented by the addition of Si as an additive element is not clear; however, assuming that this reflectivity reduction is attributed both to an unstable crystalline structure due to, for example lattice defects, and to structure relaxation, this may be because Si fixes the lattice defects and thereby stabilizes the crystal structure to avoid this.
<4> The optical recording medium according to one of <1> and <2>, wherein the recording layer comprises a composition expressed by the formula In_{α}Sb_{β}Cr_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).
   In this optical recording medium Cr is added to an InSb-based recording material, whereby reduction in the reflectivity of crystalline portions can be prevented and troubles associated with the reduction of reflectivity can be eliminated. Moreover, since Cr increases the stability of the amorphous structure, the stability of amorphous marks can also be increased. Thus, it is possible to provide an optical recording medium with increased density, which can cover a wide recording speed range of 1.0x to over 16x on DVD (equivalent to recording linear velocities of about 3.5 m/s to over 56 m/s).
   The reason why the reduction in the reflectivity of crystalline portions can be prevented by the addition of Cr as an additive element is not clear because the mechanism thereof still remains elusive; however, assuming that this reflectivity reduction is attributed to oxidation of interface between the recording layer and protective layer, this may be because Cr forms passive material that increases resistance to oxidation.
<5> The optical recording medium according to any one of <1> to <4>, wherein α and β satisfy the condition 0.80≤β/(α+β)≤0.90.
<6> The optical recording medium according to any one of <1> to <5>, wherein the recording layer performs at least one of recording, reproducing, erasing, and rewriting of information by reversibly changing between amorphous and crystalline phases by irradiation with an electromagnetic wave.
<7> The optical recording medium according to any one of <1> to <6>, wherein the crystallization temperature of the recording layer, measured at a heating rate of 10°C/min, is 150°C to 250°C.
   Since the crystallization temperature of the recording layer, measured at a heating rate of 10°C/min, is 150°C to 250°C, it is possible to ensure sufficient amorphous mark stability.
<8> The optical recording medium according to any one of <1> to <7>, wherein the thickness of the recording layer is 8 nm to 22 nm.
<9> The optical recording medium according to any one of <1> to <8>, wherein the first protective layer and the second protective layer comprise a mixture of ZnS and SiO₂. The first and second protective layers of this optical recording medium comprise a mixture of ZnS and SiO₂, which is advantageous for the following reasons: it has excellent heat resistance, thermal conductivity, and chemical stability; realizes less residual stress in films; has resistance to characteristics reduction (e.g., recording sensitivity and erase ratio) even after repeated operations of recording/erasing of information; and provides excellent adhesion to the recording layer.
<10> The optical recording medium according to any one of <1> to <9>, wherein the reflective layer comprises one of Ag and an Ag alloy.
   In this optical recording medium pure Ag or an Ag alloy has extremely high thermal conductivity, realizing during a recording operation a rapid-cooling mechanism suitable for the formation of amorphous marks, immediately after the recording layer has reached high temperatures. Thus, it is possible to form an excellent reflective layer.
<11> The optical recording medium according to <10>, wherein a third protective layer, which is free of sulfur, is disposed between the second protective layer and the reflective layer.
<12> The optical recording medium according to <11>, wherein the third protective layer comprises at least one of SiC and Si.
<13> The optical recording medium according to one of <11> and <12>, wherein the thickness of the third protective layer is 2 nm to 20 nm.
   When a reflective comprises, in particular, Ag as in the optical recording medium according to any one of <11> to <13>, the use of sulfur-containing materials (e.g., a mixture of ZnS and SiO₂) for the second reflective layer leads to corrosion of the reflective layer as a result of reaction of Ag with sulfur. To avoid this, the sulfur-free third protective layer is provided between the second protective layer and reflective layer to prevent sulfuration of Ag, thereby ensuring reliability of the optical recording medium.
<14> The optical recording medium according to any one of <1> to <13>, which is capable of recording at recording linear velocities of 3.5 m/s to 56 m/s or faster.
<15> A sputtering target comprising: a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)), wherein the sputtering target is used for production of a recording layer.
<16> The sputtering target according to <15>, wherein M represents at least one element selected from the group consisting of Ge, Al, Ag, Mn, Cu, Au and N.
<17> The sputtering target according to one of <15> and <16>, comprising: a composition expressed by the formula In_{α}Sb_{β}Si_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).
<18> The sputtering target according to one of <15> and <16>, comprising: a composition expressed by the formula In_{α}Sb_{β}Cr_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).
<19> The sputtering target according to any one of <15> to <18>, wherein α and β satisfy the condition 0.80≤β/(α+β)≤0.90.
   A recording layer having a composition of a desired element ratio can be obtained with a sputtering method using a sputtering target according to any one of <15> to <19> of the desired elemental ratio.
   Thus, it is possible to stably provide an optical recording medium with increased density, which can cover a wide recording speed range of 1.0x to over 16x on DVD (equivalent to recording linear velocities of about 3.5 m/s to over 56 m/s).
<20> A method for manufacturing an optical recording medium, comprising: forming a recording layer with a sputtering method using a sputtering target according to any one of claims 15 to 19, wherein the optical recording medium comprises: a substrate; a first protective layer; a recording layer; a second protective layer; and a reflective layer, the first protective layer, the recording layer, the second protective layer and the reflective layer being disposed on the substrate in this order or in reverse order.
   In the recording layer formation step of this method of the present invention, the recording layer is formed with a sputtering method using the sputtering target of the present invention. Thus, it is possible to efficiently manufacture an optical recording medium with increased density, which can cover a wide recording speed range of 1.0x to over 16x on DVD (equivalent to recording linear velocities of about 3.5 m/s to over 56 m/s).
<21> A method for the use of an optical recording medium, comprising: applying a laser beam to an optical recording medium according to any one of <1> to <14> from the first protective layer side to thereby perform at least one of recording, reproducing, erasing, and rewriting of information.
   In this method of the present invention a laser beam is applied to the optical recording medium of the present invention to perform at least one of recording, reproducing, erasing, and rewriting of information. Thus, it is possible to perform at least one of recording, reproducing, erasing, and rewriting of information stably, reliably, and efficiently.
<22> An optical recording and/or reproducing apparatus for applying a laser beam from a laser source to an optical recording medium to thereby at least record or reproduce information on or from the optical recording medium,
wherein the optical recording medium is an optical recording medium according to any one of <1> to <14>.

The optical recording/reproducing apparatus of the present invention is one for applying a laser beam from a laser source to an optical recording medium to at least record or reproduce information on or from the optical recording medium, wherein the optical recording medium of the present invention is used. With the optical recording/reproducing apparatus of the present invention, it is possible to at least record or reproduce information on or from the optical recording medium stably and reliably.

### Brief Description of Drawings

Fig. 1 is a schematic cross-sectional view of an example of an optical recording medium of the present invention.
Fig. 2 is a schematic cross-sectional view of another example of the optical recording medium of the present invention.

### Best Mode for Carrying Out the Invention

### (Optical recording medium)

The optical recording medium of the present invention comprises a substrate, a first protective layer on the substrate, a recording layer on the first protective layer, a second protective layer on the recording layer, and a reflective layer on the second protective layer. Alternatively, the optical recording medium of the present invention comprises a substrate, a reflective layer on the substrate, a second protective layer on the reflective layer, a recording layer on the second protective layer, and a first protective layer on the recording layer. The optical recording medium of the present invention comprises a third protective layer, and further comprises additional layer (s) as needed.

The optical recording medium is one irradiated with a laser beam from the first protective layer side to perform at least one of recording, reproduction, erasing, and rewriting of information.

### -Recording layer-

The recording layer is irradiated with a laser beam to switch back and forth between crystalline and amorphous phases, recording and erasing signals. In this case, reflectivity differs between the crystalline and amorphous phases. In general, the crystalline phase with high reflectivity serves as a non-recorded area. A high-energy laser pulse is applied to the crystalline phase to heat the recording layer. The heated recording layer is then rapidly cooled down, recording amorphous marks of low reflectivity as signals.

For the recording layer, InSb-based materials are used as a base material, because the recording layer requires high crystallization rate and high recording sensitivity. In addition, the recording layer realizes more excellent characteristics (e.g., storage reliability) by the addition of at least one element selected from the group consisting of Ge, Al, Ag, Mn, Cu, Au and N. Optical recording media having such base materials, however, have a problem in their archivability.

To solve this problem, Cr or Si is added to an InSb-based material, thereby preventing reduction in the reflectivity of crystallized portions and eliminating the problems associated with reflectivity reduction. In addition, since both Cr and Si have capacity to increase the stability of the amorphous structure, it is also possible to increase the stability of amorphous marks.

It is also possible to add an element M to recording materials consisting of In, Sb, and Si or Cr for increased characteristics; M represents at least one element selected from the group consisting of Ge, Al, Ag, Mn, Cu, Au and N, all of which are additive elements suitable for achieving high crystallization rate and amorphous mark stabilization at the same time.

Thus, the recording layer comprises a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)).

M preferably represents at least one element selected from the group consisting of Ge, Al, Ag, Mn, Cu, Au and N.

The recording layer preferably comprises a composition expressed by the formula In_{α}Sb_{β}Si_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

The recording layer preferably comprises a composition expressed by the formula In_{α}Sb_{β}Cr_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

In the formulae shown above, α and β satisfy the condition 0.73≤β/(α+β)≤0.90. If the value of β/(α+β) is less than 0.73, overwriting operations at a linear velocity equivalent to 16x DVD recording speed or faster may become difficult due to insufficient crystallization rate. If the value of β/(α+β) is greater than 0.90, it may result in reduced storage reliability. Setting α and β such that 0.80≤β/(α+β)≤0.90 for an expanded available crystallization rate range will extend the scope of available optical recording medium designs; for example, upon fabrication of an optical recording medium, the scope of available thickness for the recording layer, or the scope of available materials and/or thickness of other layers can be preferably extended.

In the foregoing formulae, γ ― the content of Si or Cr ― preferably satisfies the condition 2≤γ≤10, more preferably the condition 2≤γ≤6. This is because if the content of Si or Cr exceeds 10 atomic%, it results in reduction in overwriting characteristics and because if less than 2 atomic% is used, effects brought about by this element are not clear.

Moreover, in the foregoing formulae, δ ― the content of M ― preferably satisfies the condition 0≤δ≤20, more preferably the condition 1≤δ≤10. This is because if the content of M exceeds 20 atomic%, it results in reduction in overwriting characteristics.

The crystallization temperature of the recording layer, measured at a heating rate of 10°C/min, is preferably 150°C to 250°C, more preferably 165°C to 225°C. This ensures sufficient amorphous stability. By adjusting the amount of Si, Cr or M in the recording layer, it is possible to allow crystallization temperature to fall within this temperature range.

The crystallization temperature can be measured using, for example, a differential scanning calorimeter (DSC220, Seiko. Instruments Inc.).

For the method for forming the recording layer, various vapor deposition methods can be used ― vacuum deposition, sputtering method, plasma CVD, photo CVD, ion plating, electron-beam deposition, or the like. Among these methods, the sputtering method is excellent in terms of mass-productivity and film quality.

The thickness of the recording layer is preferably 8 nm to 22 nm, more preferably 10 nm to 18 nm. If the thickness is less than 8 nm, the sensitivity of the resulting optical recording medium can be increased because the thermal capacity of the recording layer can be reduced, but optical distance (i.e., the distance in which a reproduction light beam travels) becomes so short that it is difficult to obtain sufficient reflectivity contrast, resulting reduced reproduction reliability in some cases. If the thickness is greater than 22 nm, enhanced reflectivity constant can be obtained, but it may result in reduced sensitivity due to an increased volume of the recording layer.

Next, an example of a layer configuration of the optical recording medium of the present invention will be described with reference to the drawings.

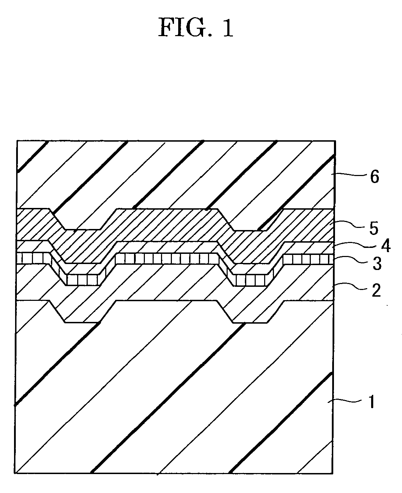

FIG. 1 is a schematic cross-sectional view of an example of the optical recording medium of the present invention, where a substrate 1 is provided, and a first protective layer 2, recording layer 3, second protective layer 4, reflective layer 5 and resin protective layer 6 are sequentially provided on the substrate 1.

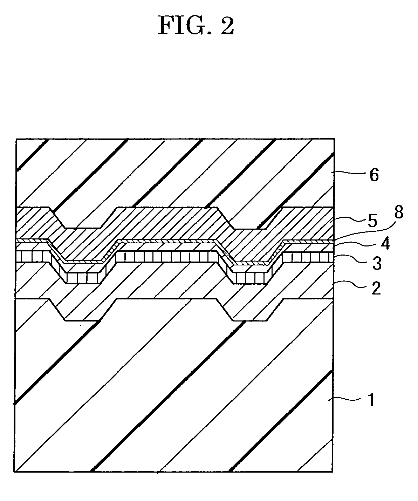

FIG. 2 is a schematic cross-sectional view of another example of the optical recording medium of the present invention, where a substrate 1 is provided, and a first protective layer 2, recording layer 3, second protective layer 4, third protective layer 8, reflective layer 5 and resin protective layer 6 are sequentially provided on the substrate 1.

Where appropriate, another substrate (dummy substrate) may be bonded to the resin protective layer 6 for further reinforcement or protection of the optical recording medium.

### -Substrate-

The substrate 1 needs to be made of material that can impart mechanical strength to the optical recording medium. Moreover, when a recording beam and a reproduction beam are incident to the optical recording medium by passing through the substrate 1, the substrate 1 needs be transparent enough to admit beams of desired wavelengths.

Examples of materials for the substrate include glass, ceramics and resins; substrates made of resin are preferably used in view of their moldability and costs. Examples of such resins include polycarbonate resins, acrylic resins, epoxy resins, polystyrene resins, acrylonitrile-styrene copolymers, polyethylene resins, polypropylene resins, silicone resins, fluorine resins, ABS resins, and urethane resins. Among these, polycarbonate resins and acrylic resins are most preferable in view of their moldability, optical characteristics, and costs.

The thickness of the substrate 1 is not particularly limited, generally determined depending on the wavelengths of laser beams employed and/or on light-condensing characteristics of a pickup lens. In CDs where a beam of 780 nm wavelength is used, substrates of 1.2 mm thickness are employed. In DVDs where a beam of 650 nm to 665 nm wavelength is used, substrates of 0.6 mm thickness are employed.

For the substrate, a substrate made of polycarbonate resin is preferably used that is excellent in processibility and optical characteristics. For example, such a substrate is a disc of 12 cm in diameter and 0.6 mm in thickness, having a tracking groove on its surface. The tracking groove is preferably a wobble groove with the following specification: pitch = 0.74 ± 0.03 µm; depth = 22 nm to 40 nm; and width = 0.2 µm to 0.4 µm. In particular, increasing the depth of the groove leads to a reduction in the reflectivity of the optical recording medium, increasing the degree of modulation.

Note that an adhesion layer ― a layer that serves to bond a dummy substrate to the substrate 1 that records information signals thereon ― is formed of any of a two-sided sheet, in which an adhesive is applied on both sides of the base film, thermosetting resin, and ultraviolet-curable resin. The thickness of the adhesion layer is generally on the order of 50 µm.

The dummy substrate is not necessarily transparent in a case where an adhesive sheet or thermosetting resin is used as the adhesion layer. However, the dummy substrate is preferably transparent in a case where ultraviolet-curable resin is used as the adhesion layer. In general, the dummy substrate is preferably 0.6 mm in thickness ― as thick as the transparent substrate in which information signals are to be written.

### -First protective layer-

Preferably, the first protective layer 2 bonds well to both the substrate and recording layer, and has high heat resistance. Moreover, since the first protective layer 2 also serves as an optical interference layer that enables the recording layer to efficiently absorb light, it preferably has optical characteristics suitable for repetitive recording operations at high linear velocities.

Examples of materials for the first protective layer include metal oxides such as SiO, SiO₂ ZnO, SnO₂, Al₂O₃, TiO₂, In₂O₃, MgO and ZrO₂; nitrides such as Si₃N₄, AlN, TiN, BN and ZrN; sulfides such as ZnS, In₂S₃ and TaS₄; carbides such as SiC, TaC, B₄C, WC, TiC and ZrC; diamond carbon; and mixtures thereof. Among these, a mixture of ZnS and SiO₂ is preferable; the molar ratio between ZnS and SiO₂ (ZnS : SiO₂) is preferably 50 to 90 : = 50 to 10, more preferably 60 to 90 : 40 to 10.

For the method for forming the first protective layer 2, various vapor deposition methods can be used ― vacuum deposition, sputtering method, plasma CVD, photo CVD, ion plating, electron-beam deposition, or the like. Among these methods, the sputtering method is excellent in terms of mass-productivity and film quality.

The thickness of the first protective layer is not particularly limited and can be appropriately determined depending on the intended purpose; it is preferably 50 nm to 250 nm, more preferably 75 nm to 200 nm. If the thickness is less than 50 nm, the substrate may have reduced heat resistance and thus becomes deformed because the substrate is also heated when heating the recording layer. If the thickness is greater than 250 nm, film temperatures increase during film deposition processes by sputtering or the like, which may create cracks in the films, may cause film separation, and/or may lead to reduced recording sensitivity.

### -Second protective layer-

Preferably, the second protective layer 4 bonds well both to the substrate and recording layer, and has high heat resistance. Moreover, since the second protective layer 4 also serves as an optical interference layer that enables the recording layer to efficiently absorb light, it preferably has optical characteristics suitable for repetitive recording operations at high linear velocities.

Examples of materials for the second protective layer include metal oxides such as SiO, SiO₂, ZnO, SnO₂, Al₂O₃, TiO₂, In₂O₃, MgO and ZrO₂; nitrides such as Si₃N₄, AlN, TiN, BN and ZrN; sulfides such as ZnS, In₂S₃ and TaS₄; carbides such as SiC, TaC, B₄C, WC, TiC and ZrC; diamond carbon; and mixtures thereof. Among these, a mixture of ZnS and SiO₂ is preferable; the molar ratio between ZnS and SiO₂ (ZnS : SiO₂)is preferably 50 to 90 : 50 to 10, more preferably 60 to 90 : 40 to 10.

For the method for forming the second protective layer 4, various vapor deposition methods can be used ― vacuum deposition, sputtering method, plasma CVD, photo CVD, ion plating, electron-beam deposition, or the like. Among these methods, the sputtering method is excellent in terms of mass-productivity and film quality.

The thickness of the second protective layer is not particularly limited and can be appropriately determined depending on the intended purpose; it is preferably 10 nm to 100 nm, more preferably 15 nm to 50 nm. If the thickness is greater than 100 nm, it may result in impaired overwriting characteristics due to reduced recording sensitivity, and to film separation, substrate deformation and reduced heat dissipating properties caused as a result of increased film temperatures. If the thickness is less than 10 nm, it generally results in reduced heat resistance.

### -Reflective layer-

The reflective layer 5 functions not only as a light reflection layer, but also as a heat-dissipating layer for dissipating heat that has been applied during a recording operation to the recording layer by irradiation with a laser beam. For cooling by heat dissipation, the cooling rate significantly affects how uniform the formed amorphous marks are. For this reason, selecting appropriate reflective layers is important with respect to phase-change optical recording media that support high linear velocities.

Examples of materials for the reflective layer 5 include metals such as Al, Au, Ag, Cu and Ta and alloys thereof. In addition, Cr, Ti, Si, Cu, Ag, Pd, Ta and the like can be added to these metals as an additive element. Among these, the reflective layer 5 preferably contains either Ag or an Ag alloy. This is because, in general, the reflective layer constituting the optical recording medium is preferably made of metal with high thermal conductivity and reflectivity from the view point of controlling the rate of removal of heat generated upon recording and from the optical view point of increasing the contrast of reproduction signals by utilizing interference effects, and because both pure Ag and an Ag alloy have a thermal conductivity of as high as 427 W/mK and thus can realize a rapid cooling mechanism suitable for the formation of an amorphous structure, by which the recording layer that has reached a high temperature is immediately cooled down.

Although pure Ag is the best choice in light of its high thermal conductivity, Cu may be added in order to impart corrosion resistance. At this point, Cu is preferably present in an amount of 0.1 atomic% to 10 atomic%, more preferably 0.5 atomic% to 3 atomic% so as not to adversely affects the characteristics of Ag. When Cu is added in excessive amounts, the thermal conductivity of Ag may be reduced.

The reflective layer 5 can be formed with various vapor deposition methods ― vacuum deposition, sputtering method, plasma CVD, photo CVD, ion plating, electron-beam deposition or the like. Among these methods, the sputtering method is excellent in terms of mass-productivity and film quality.

The thickness of the reflective layer is not particularly limited and can be appropriately determined depending on the intended purpose; it is preferably 100 nm to 300 nm, more preferably 120 nm to 250 nm. If the thickness is less than 100 nm, it may fail to exert heat dissipating properties, and thus the formation of amorphous marks become difficult. If the thickness is greater than 300 nm, it may result in increased material costs and may give rise to interface separations.

### -Third protective layer 8-

As shown in Fig. 2, the third protective layer 8 is preferably provided between the second protective layer 4 and the reflective layer 5.

Examples of materials for the third protective layer 8 include Si, SiC, SiN, SiO₂, TiC, TiO₂, TiC-TiO₂, NbC, NbO₂, NbV-NbO₂, Ta₂O₅, Al₂O₃, ITO, GeN and ZrO₂. Among these, TiC-TiO₂, Si and SiC is preferable in light of their high barrier properties.

When a reflective layer containing pure Ag or an Ag alloy and a protective layer containing sulfur (e.g., a mixture of ZnS and SiO₂) are used, diffusion of sulfur into Ag (i.e., sulfuration of Ag) occurs, resulting in disc defects. Thus, appropriate materials that satisfy the following requirements need to be selected for the third protective layer 3 in order to prevent the occurrence of such a reaction: (1) barrier properties to prevent sulfuration of Ag; (2) optical transparency to admit laser beams; (3) low thermal conductivity for the formation of amorphous marks; (4) excellent adhesiveness to the protective layer and/or reflective layer; and (5) excellent formability into layers, etc. Materials containing TiC-TiO₂, Si or SiC as a main constituent, satisfying the foregoing requirements, are preferable for the third protective layer.

For the method for forming the third protective layer, various vapor deposition methods can be used ― vacuum deposition, sputtering method, plasma CVD, photo CVD, ion plating, electron-beam deposition, or the like. Among these methods, the sputtering method is excellent in terms of mass-productivity and film quality.

The thickness of the third protective layer is preferably 2 nm to 20 nm, more preferably 2 nm to 10 nm. If the thickness is less than 2 nm, the third protective layer may not function as a barrier layer. If the thickness is greater than 20 nm, there is a fear that modulation degree may be reduced.

It should be noted that the resin protective layer 6 can be provided on the reflective layer 5 on an as-needed basis. The resin protective layer 6 acts to protect the recording layer during the manufacturing process or after the product is in service, and is generally formed of ultraviolet-curable resin. The thickness of the resin protective layer is preferably 2 µm to 5 µm.

The optical recording medium of the present invention has been described. The present invention, however, is not limited to the embodiments described above and various modifications can be made thereto without departing from the scope of the present invention. For example, the present invention can also be adopted, for example, to optical recording media in which two identical or different optical recording media are bonded together with a resin protective layer interposed between them, in stead of using a dummy substrate seen in general DVDs.

### (Sputtering target)

The sputtering target of the present invention is used for the production of a recording layer, and comprises a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)).

M preferably represents at least one element selected from the group consisting of Ge, Al, Ag, Mn, Cu, Au and N.

The sputtering target of the present invention preferably comprises a composition expressed by the formula In_{α}Sb_{β}Si_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

The sputtering target of the present invention preferably comprises a composition expressed by the formula In_{α}Sb_{β}Cr_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

In the formulae shown above, α and β satisfy the condition 0.73≤β/(α+β)≤0.90, more preferably the condition 0.80≤β/(α+β)≤0.90. In addition, γ satisfies the condition 2≤γ≤10, more preferably the condition 2≤γ≤6, and δ satisfies the condition 0≤δ≤20, more preferably the condition 1≤δ≤10.

As described above, for the sputtering target of the present invention, it is effective to use an alloy target having a composition identical to a desired composition of a recording layer to be formed, for the purpose of achieving stable formation of such a recording layer having the desired composition.

The method for producing the sputtering target is not particularly limited and can be appropriately determined depending on the intended purpose; the sputtering target can be produced in the following manner: a predetermined amount of sputtering target is measured into a glass ample, and is heated to melt. Thereafter, the resultant sputtering target is pulverized with a pulverizer, and the resultant power is heated and baked. In this way a disc-shaped sputtering target can be obtained.

According to the present invention, it is possible to provide an optical recording medium which can cover a wide recording speed range of 1.0x to over 16x on DVD (equivalent to recording linear velocities of about 3.5 m/s to over 56 m/s), can achieve repeated recording, and has increased storage reliability.

According to the present invention, it is also possible to provide a sputtering target used to manufacture an optical recording medium which has excellent repeated recording characteristics over a wide recording linear velocity range while achieving as much storage capacity as DVD-ROMs.

### (Method for manufacturing optical recording media)

The method of the present invention for manufacturing an optical recording medium includes at least a recording layer formation step. Moreover, this method includes an initial crystallization step, and further includes additional step(s) on an as-needed basis.

### -Recording layer formation step-

The recording layer formation step is one in which a recording layer is deposited by sputtering of the sputtering target of the present invention.

The sputtering method is not particularly limited and can be appropriately selected from those known in the art; for example, sputtering is preferably performed under the following conditions: deposition gas = Ar gas; input voltage = 1 kW to 5kW; and deposition gas flow rate = 10 sccm to 40 sccm. The Ar gas pressure inside a chamber during sputtering is preferably 7.0 x 10⁻³ mTorr (mbar) or less.

### -Initial crystallization step-

The initial crystallization step is one in which an optical recording medium is rotated at a predetermined linear velocity and initial crystallization is performed on the recording medium at a predetermined power density.

Vapor deposition methods are generally used for film deposition in a disc having a configuration as described above, and vapor deposition is performed at low temperatures because a resin-made substrate is used. Since a freshly prepared recording layer is one which has just been cooled from a high-energy gaseous phase, it is generally amorphous and has low reflectivity. For this reason, it is preferable to form amorphous marks in the crystalline recording layer to keep the reflectivity of the optical recording medium higher. To achieve this, initialization is required to crystallize information recording areas of the optical recording medium. Initialization is performed by applying a large-diameter, high-output laser beam around the recording layer, melting the recording layer, and allowing the recording layer to gradually cool down. Although any high-output laser beam and any optical system can be employed, a laser beam of about 800 nm wavelength is generally employed. The output of the laser beam is preferably 500 mW to 3,000 mW, more preferably 1,000 mW to 2,500 mW. The beam spot is preferably 0.5 µm to 2.0 µm in the scanning direction, and 30 µm to 200 µm in the direction perpendicular to the scanning direction. The use of such a rectangular or oval beam spot can widen the unit area irradiated with a laser beam. It is necessary to set an optimal scanning speed and irradiation power according to thermal and optical characteristics of the optical recording medium.

### (Method for the use of optical recording media)

The method of the present invention for the use of optical recording media performs at least one of recording, reproducing, erasing, and rewriting of information by irradiating the optical recording medium of the present invention with a laser beam from the first protective layer side.

In this case, the recording linear velocity of the optical recording medium can cover a wide recording speed range of 1.0x to over 16x on DVD (equivalent to recording linear velocities of about 3.5 m/s to over 56 m/s).

More specifically, a recording laser beam (e.g., a semiconductor laser beam) is applied through an objective lens onto the optical recording medium from the substrate side, the optical recording medium rotating at a predetermined linear velocity. The recording layer absorbs the applied laser beam to cause a local temperature increase, thereby forming, for example, marks with different optical characteristics to record information thereon. The information thus recorded can be reproduced by applying from the substrate side a laser beam onto the optical recording medium rotating at a predetermined linear velocity, and detecting the reflected light beams.

### (Optical recording/reproducing apparatus)

The optical recording/reproducing apparatus of the present invention is one which at least records or reproduce information on or from an optical recording medium by irradiating it with a laser beam emitted from a laser beam source, wherein the optical recording medium of the present invention is used.

The optical recording/reproducing apparatus of the present invention is not particularly limited and can be appropriately selected depending on the intended purpose. For example, the optical recording/reproducing apparatus of the present invention includes a laser beam source such as a semiconductor laser beam source for emitting laser beams; a collective lens for collecting the laser beam emitted from the laser beam source onto an optical recording medium which is attached to a spindle; an optical device for guiding the laser beam emitted from the laser beam source both to the collective lens and a laser beam detector; and the laser beam detector for detecting reflected beams, and further includes additional unit(s) on an as-needed basis.

The optical recording/reproducing apparatus uses the optical device to guide a laser beam, which has been emitted from the laser beam source, to the collective lens, and records information on the optical recording medium by collecting and focusing the laser beam onto the optical recording medium through the collective lens. At this point, the optical recording/reproducing apparatus guides a reflected laser beam to the laser beam detector, controlling the light intensity of the laser beam source on the basis of the intensity of the laser beam detected by the laser beam detector.

The laser beam detector converts the laser beam intensity into voltage or current and outputs it as an intensity signal.

Examples of the additional unit(s) include a control unit; such a control unit is not particularly limited as long as it can control each of the units described above, and can be appropriately selected depending on the intended purpose. For example, a sequencer for applying intensity-modulated laser beams, or a computer can be used.

According to the present invention, by adding Si or Cr to an InSb-based recording layer material, it is made possible to provide an optical recording medium with excellent storage reliability, which is capable of recording over a wide recording speed range of 1.0x to over 16x on DVD (equivalent to recording linear velocities of about 3.5 m/s to over 56 m/s) while achieving as much storage capacity as DVD-ROMs.

Hereinafter, the present invention will be described in detail with reference to Examples, which however shall not be construed as limiting the invention thereto.

### (Example 1)

### -Preparation of optical recording medium-

Using Big Sprinter, a sputtering device manufactured by Unaxis, Co. Ltd., a first protective layer, recording layer, second protective layer, third protective layer, and reflective layer were sequentially deposited on a substrate as described below.

At first, a polycarbonate resin substrate of 12 cm in diameter and 0.6 mm in thickness, having a pattern of grooves with constant track pitch of 0.74 µm, was prepared. The substrate was then subjected to high temperature for removal of water.

Next, a first protective layer was deposited on the substrate to a thickness of 65 nm by sputtering a sputtering target of (ZnS)₈₀(SiO₂)₂₀ (mole%).

Next, a recording layer was deposited on the first protective layer to a thickness of 16 nm by sputtering a sputtering target of In₁₇Sb₇₇Cr₆ (atomic%) at an Ar gas pressure of 3.0 x 10⁻³ Torr and RF power of 300 mW. Note that the target for the recording layer was rendered disc shape by measuring a predetermined amount of a sputtering target into a glass ample, heating it to melt, pulverizing the resultant sputtering target with a pulverizer, and heating and baking the resultant power. The elemental ratio of the deposited recording layer analyzed by inductively coupled plasma (ICP) emission spectrophotometric analysis was determined to be identical to that of the sputtering target measured into the glass ample. A sequential ICP emission spectrophotometric analyzer (SPS4000, manufactured by Seiko Instruments, Inc.) was used for this analysis. It should be noted in Examples and Comparative Examples to be described later that the alloy composition of the recording layer is identical to that of the sputtering target.

The crystallization temperature of the resultant recording layer as determined using a differential scanning calorimeter (DSC220, Seiko. Instruments Inc.) was 201°C.

Next, a second protective layer was deposited on the recording layer to a thickness of 10 nm by sputtering a sputtering target of (ZnS)₈₀(SiO₂)₂₀ (mole%).

Next, a third protective layer was deposited on the second protective layer to a thickness of 4 nm by sputtering a sputtering target of SiC.

Next, a reflective layer was deposited on the third protective layer to a thickness of 120 nm by sputtering a sputtering target of pure Ag.

Next, a coating solution containing acrylic curable resin (SD-318, produced by Dainippon Ink and Chemicals, Incorporated) was applied onto the reflective layer by use of a spinner to a thickness of 5 µm to 10 µm, and was irradiated with UV to form a resin protective layer.

Finally, a polycarbonate resin substrate of 12 cm in diameter and 0.6 mm in thickness was bonded to the resin protective layer by use of an adhesive sheet. In this way an optical recording medium of Example 1 was prepared.

### (Example 2)

### -Preparation of optical recording medium-

An optical recording medium of Example 2 was prepared in a manner similar to that described in Example 1 except that the composition of the recording layer was changed to In₁₈Sb₈₀Cr₂.

### (Example 3)

### -Preparation of optical recording medium-

An optical recording medium of Example 3 was prepared in a manner similar to that described in Example 1 except that the composition of the recording layer was changed to In₁₆Sb₇₅Cr₉.

### (Example 4)

### -Preparation of optical recording medium-

An optical recording medium of Example 4 was prepared in a manner similar to that described in Example 1 except that the composition of the recording layer was changed to In₁₀Sb₈₄Cr₆.

### (Example 5)

### -Preparation of optical recording medium-

An optical recording medium of Example 5 was prepared in a manner similar to that described in Example 1 except that the composition of the recording layer was changed to In₂₃Sb₇₁Cr₆.

### (Example 6)

### -Preparation of optical recording medium-

An optical recording medium of Example 6 was prepared in a manner similar to that described in Example 1 except that the composition of the recording layer was changed to In₁₆Sb₇₅Cr₆Ge₃.

### (Example 7)

### -Preparation of optical recording medium-

An optical recording medium of Example 7 was prepared in a manner similar to that described in Example 1 except that the composition of the recording layer was changed to In₁₅Sb₇₆Cr₅Ag₂Ge₂.

### (Example 8)

### -Preparation of optical recording medium-

An optical recording medium of Example 8 was prepared in a manner similar to that described in Example 1 except that the composition of the recording layer was changed to In₁₆Sb₇₆Cr₄Al₄.

### (Example 9)

### -Preparation of optical recording medium-

An optical recording medium of Example 9 was prepared in a manner similar to that described in Example 1 except that the composition of the recording layer was changed to In₁₆Sb₇₆Cr₅Mn₃.

### (Example 10)

### -Preparation of optical recording medium-

An optical recording medium of Example 10 was prepared in a manner similar to that described in Example 10 except that the composition of the recording layer was changed to In₁₅Sb₇₅Cr₆Cu₄.

### (Example 11)

### -Preparation of optical recording medium-

An optical recording medium of Example 11 was prepared in a manner similar to that described in Example 1 except that the composition of the recording layer was changed to In₁₆Sb₇₆Cr₅Au₃.

### (Example 12)

### -Preparation of optical recording medium-

An optical recording medium of Example 12 was prepared in a manner similar to that described in Example 1 except that the composition of the recording layer was changed to In₁₃Sb₆₇Cr₅Mn₁₅.

### (Comparative Example 1)

### -Preparation of optical recording medium-

An optical recording medium of Comparative Example 1 was prepared in a manner similar to that described in Example 1 except that the composition of the recording layer was changed to In₂₂Sb₇₈.

### (Comparative Example 2)

### -Preparation of optical recording medium-

An optical recording medium of Comparative Example 2 was prepared in a manner similar to that described in Example 1 except that the composition of the recording layer was changed to In₁₉Sb₈₀Cr₁.

### (Comparative Example 3)

### -Preparation of optical recording medium-

An optical recording medium of Comparative Example 3 was prepared in a manner similar to that described in Example 1 except that the composition of the recording layer was changed to In₁₅Sb₆₉Cr₁₆.

### (Comparative Example 4)

### -Preparation of optical recording medium-

An optical recording medium of Comparative Example 4 was prepared in a manner similar to that described in Example 1 except that the composition of the recording layer was changed to In₂₈Sb₆₆Cr₆.

### (Comparative Example 5)

### -Preparation of optical recording medium-

An optical recording medium of Comparative Example 5 was prepared in a manner similar to that described in Example 1 except that the composition of the recording layer was changed to In₈Sb₈₆Cr₆.

### (Comparative Example 6)

### -Preparation of optical recording medium-

An optical recording medium of Comparative Example 6 was prepared in a manner similar to that described in Example 1 except that the composition of the recording layer was changed to In₁₃Sb₆₁Cr₅Mn₂₁.

### <Initialization>

Initialization was performed in the following procedure: In PCR DISK INITIALIZER, an initializer manufactured by Hitachi Computer Peripherals Co., Ltd., each optical recording medium was rotated at a constant linear velocity and a laser beam with a power density of 10 mW/µm² to 30 mW/µm² was applied onto the optical recording medium while moving the laser beam at a constant speed in the radial direction of the optical recording medium.

### <Evaluations>

The initialized optical recording media were evaluated for signal characteristics, storage reliability, and the level of reduction in the reflectivity of the crystalline portions as described below. The results are shown in Table 1.

### <Evaluations of signal characteristics>

For each optical recording medium, repeated overwriting operations were conducted using EFM (8/14) random pattern at a recording density and recording power of 56 m/s or greater (38 mW), with the wavelength of a recording laser being set to 650 nm. The jitter of a 3T signal and the degree of modulation of a 14T signal were investigated to evaluate its reproduction signal characteristics.

### <Evaluation of storage reliability>

Storage reliability was evaluated in terms of the jitter of a 3T signal and the degree of modulation of a 14T signal, measured at the first overwriting operation after exposing the optical recording medium to high temperature and high humidity (85°C, 85RH%) for 100 hours.

### <Determination of level of reduction in the reflectivity of crystalline portions>

For each optical recording medium, the level of reduction in the reflectivity of crystalline portions was evaluated in terms of the difference in reflectivity between before and after a storage test, in which the optical recording medium is exposed to high temperature and high humidity (85°C, 85RH%) for 100 hours: Reflectivity difference (%) = (reflectivity (%) before storage test) - (reflectivity (%) after 100-hour storage test).

**Table 1**

| | Recording layer composition (at%) | Jitter after overwriting (%) | | Degree of modulation after overwriting (%) | | Storage reliability | | |
|---|---|---|---|---|---|---|---|---|
| | | 1 time | 1,000 times | 1 time | 1,000 times | Jitter (%) | Degree of modulation (%) | Reflectivity reduction (%) |
| Ex. 1 | In₁₇Sb₇₇Cr₆ | 8.2 | 8.7 | 69 | 66 | 8.8 | 66 | 0.7 |
| Ex. 2 | In₁₈Sb₈₀Cr₂ | 8.2 | 8.5 | 68 | 66 | 8.8 | 63 | 0.9 |
| Ex. 3 | In₁₆Sb₇₅Cr₉ | 8.4 | 8.9 | 68 | 65 | 8.5 | 66 | 0.4 |
| Ex. 4 | In₁₀Sb₈₄Cr₆ | 8.3 | 8.4 | 66 | 65 | 8.9 | 62 | 0.4 |
| Ex. 5 | In₂₃Sb₇₁Cr₆ | 8.1 | 8.9 | 69 | 65 | 8.6 | 66 | 0.9 |
| Ex. 6 | In₁₆Sb₇₅Cr₆Ge₃ | 8.3 | 8.6 | 67 | 66 | 8.4 | 66 | 0.6 |
| Ex. 7 | In₁₅Sb₇₆Cr₅Ag₂Ge₂ | 8.1 | 8.3 | 68 | 67 | 8.3 | 67 | 0.4 |
| Ex. 8 | In₁₆Sb₇₆Cr₄Al₄ | 8.5 | 8.6 | 69 | 68 | 8.7 | 68 | 0.6 |
| Ex. 9 | In₁₆Sb₇₆Cr₅Mn₃ | 8.6 | 8.7 | 69 | 67 | 8.8 | 68 | 0.6 |
| Ex. 10 | In₁₅Sb₇₅Cr₆Cu₄ | 8.5 | 8.8 | 69 | 68 | 8.7 | 68 | 0.6 |
| EX.11 | In₁₆Sb₇₆Cr₅Au₃ | 8.5 | 8.9 | 68 | 67 | 8.7 | 67 | 0.5 |
| EX. 12 | In₁₃Sb₆₇Cr₅Mn₁₅ | 8.7 | 8.9 | 69 | 68 | 8.9 | 68 | 0.5 |
| Compara. Ex. 1 | In₂₂Sb₇₈ | 8.2 | 8.8 | 65 | 65 | 21 | 61 | 8.1 |
| Compara. Ex. 2 | In₁₉Sb₈₀Cr₁ | 8.2 | 8.9 | 64 | 65 | 21 | 55 | 7.7 |
| Compara. Ex. 3 | In₁₅Sb₆₉Cr₁₆ | 8.3 | 16 | 65 | 53 | 8.5 | 64 | 0.5 |
| Compara. Ex. 4 | In₂₈Sb₆₆Cr₆ | 8.1 | 15 | 70 | 73 | 16 | 68 | 0.8 |
| Compara. Ex. 5 | In₈Sb₈₆Cr₆ | 8.1 | 8.9 | 60 | 58 | 22 | 43 | 0.8 |
| Compara. Ex. 6 | In₁₃Sb₆₁Cr₅Mn₂₁ | 8.9 | 19 | 65 | 60 | 9.0 | 62 | 0.5 |

The results represented in Table 1 show that sufficient degrees of modulation and sufficient overwriting characteristics are obtained in Examples 1 to 12, together with excellent storage reliability and less reflectivity reduction achieved by the addition of Cr.

In contrast to Examples, reductions in jitter characteristics during the storage test are seen in Comparative Examples 1, 2 and 5, and the level of reduction in reflectivity is large in Comparative Examples 1 and 2. Moreover, Comparative Examples 3, 4 and 6 show an increase in jitter after 1,000 cycles of overwriting, showing poor overwriting characteristics.

Poor storage reliability and great reduction in reflectivity as seen in Comparative Example 1 may be due to lack of Cr. Poor storage reliability and great reduction in reflectivity seen in Comparative Example 2 and poor overwriting characteristics seen in Comparative Example 3 may be attributed to the fact that the content of Cr was outside the range of 2 atomic% to 15 atomic%. Poor characteristics seen in Comparative Examples 4 and 5 may be attributed to the fact that the value of β/(α+β) ― the ratio of Sb content to the total of In and Sb contents ― was outside the range of 0.73 to 0.90. Moreover, poor characteristics seen in Comparative Example 6 may be attributed to the fact that the content of Mn was greater than 20 atomic%.

### (Production Example 1)

Upon formation of a recording layer in Example 1, Cr chips having the same Cr ratio as a desired recording layer composition were first placed on an InSb alloy target that has the same elemental ratio as the desired recording layer composition, followed by sputtering of the target. However, in this case, production of a recording layer having the desired composition was difficult; it failed to stably form a recording layer having a composition identical to that of a sputtering target that originally contains Cr.

Accordingly, it is effective to originally use an alloy target having a composition identical to a desired recording layer composition in order to achieve stable formation of a recording layer having a composition identical to that of the sputtering target.

### (Example 13)

### -Preparation of optical recording medium-

Using Big Sprinter, a sputtering device manufactured by Unaxis, Co. Ltd., a first protective layer, recording layer, second protective layer, third protective layer, and reflective layer were sequentially deposited on a substrate as described below.

At first, a polycarbonate resin substrate of 12 cm in diameter and 0.6 mm in thickness, having a pattern of grooves with constant track pitch of 0.74 µm, was prepared. The substrate was then subjected to high temperature for removal of water.

Next, a first protective layer was deposited on the substrate to a thickness of 65 nm by sputtering a sputtering target of (ZnS)₈₀(SiO₂)₂₀ (mole%).

Next, a recording layer was deposited on the first protective layer to a thickness of 16 nm by sputtering a sputtering target of In₁₇Sb₇₈Si₅ (atomic%) at an Ar gas pressure of 3.0 x 10⁻³ Torr and RF power of 300 mW. Note that the target for the recording layer was rendered disc shape by measuring a predetermined amount of a sputtering target into a glass ample, heating it to melt, pulverizing the resultant sputtering target with a pulverizer, and heating and baking the resultant power. The elemental ratio of the deposited recording layer analyzed by inductively coupled plasma (ICP) emission spectrophotometric analysis was determined to be identical to that of the sputtering target measured into the glass ample. A sequential ICP emission spectrophotometric analyzer (SPS4000, manufactured by Seiko Instruments, Inc.) was used for this analysis. It should be noted in Examples and Comparative Examples to be described later that the alloy composition of the recording layer is identical to that of the sputtering target.

The crystallization temperature of the resultant recording layer as determined using a differential scanning calorimeter (DSC220, Seiko. Instruments Inc.) was 215°C.

Next, a second protective layer was deposited on the recording layer to a thickness of 10 nm by sputtering a sputtering target of (ZnS)₈₀(SiO₂)₂₀ (mole%).

Next, a third protective layer was deposited on the second protective layer to a thickness of 4 nm by sputtering a sputtering target of SiC.

Next, a reflective layer was deposited on the third protective layer to a thickness of 120 nm by sputtering a sputtering target of pure Ag.

Next, a coating solution containing acrylic curable resin (SD-318, produced by Dainippon Ink and Chemicals, Incorporated) was applied onto the reflective layer by use of a spinner to a thickness of 5 µm to 10 µm, and was irradiated with UV to form a resin protective layer.

Finally, a polycarbonate resin substrate of 12 cm in diameter and 0.6 mm in thickness was bonded to the resin protective layer by use of an adhesive sheet. In this way an optical recording medium of Example 13 was prepared.

### (Example 14)

### -Preparation of optical recording medium-

An optical recording medium of Example 14 was prepared in a manner similar to that described in Example 13 except that the composition of the recording layer was changed to In₁₈Sb₈₀Si₂.

### (Example 15)

### -Preparation of optical recording medium-

An optical recording medium of Example 15 was prepared in a manner similar to that described in Example 13 except that the composition of the recording layer was changed to In₁₈Sb₇₃Si₉.

### (Example 16)

### -Preparation of optical recording medium-

An optical recording medium of Example 16 was prepared in a manner similar to that described in Example 13 except that the composition of the recording layer was changed to In₁₀Sb₈₅Si₅.

### (Example 17)

### -Preparation of optical recording medium-

An optical recording medium of Example 17 was prepared in a manner similar to that described in Example 13 except that the composition of the recording layer was changed to In₂₄Sb₇₁Si₅. (Example 18)

### -Preparation of optical recording medium-

An optical recording medium of Example 18 was prepared in a manner similar to that described in Example 13 except that the composition of the recording layer was changed to In₁₆Sb₇₆Si₅Ge₃.

### (Example 19)

### -Preparation of optical recording medium-

An optical recording medium of Example 19 was prepared in a manner similar to that described in Example 13 except that the composition of the recording layer was changed to In₁₅Sb₇₅Si₅Ag₂Ge₃. (Example 20)

### -Preparation of optical recording medium-

An optical recording medium of Example 20 was prepared in a manner similar to that described in Example 13 except that the composition of the recording layer was changed to In₁₆Sb₇₆Si₅Al₃. (Example 21)

### -Preparation of optical recording medium-

An optical recording medium of Example 21 was prepared in a manner similar to that described in Example 13 except that the composition of the recording layer was changed to In₁₆Sb₇₆Si₄Mn₄.

### (Example 22)

### -Preparation of optical recording medium-

An optical recording medium of Example 22 was prepared in a manner similar to that described in Example 13 except that the composition of the recording layer was changed to In₁₅Sb₇₅Si₅Cu₅.

### (Example 23)

### -Preparation of optical recording medium-

An optical recording medium of Example 23 was prepared in a manner similar to that described in Example 13 except that the composition of the recording layer was changed to In₁₆Sb₇₆Si₄Au₄.

### (Example 24)

### -Preparation of optical recording medium-

An optical recording medium of Example 24 was prepared in a manner similar to that described in Example 13 except that the composition of the recording layer was changed to In₁₃Sb₆₇Si₅Cu₁₅.

### (Comparative Example 7)

### -Preparation of optical recording medium-

An optical recording medium of Comparative Example 7 was prepared in a manner similar to that described in Example 13 except that the composition of the recording layer was changed to In₂₁Sb₇₉.

### (Comparative Example 8)

### -Preparation of optical recording medium-

An optical recording medium of Comparative Example 8 was prepared in a manner similar to that described in Example 13 except that the composition of the recording layer was changed to In₂₈Sb₆₇Si₅.

### (Comparative Example 9)

### -Preparation of optical recording medium-

An optical recording medium of Comparative Example 9 was prepared in a manner similar to that described in Example 13 except that the composition of the recording layer was changed to In₉Sb₈₆Si₅.

### (Comparative Example 10)

### -Preparation of optical recording medium-

An optical recording medium of Comparative Example 10 was prepared in a manner similar to that described in Example 13 except that the composition of the recording layer was changed to In₁₈Sb₈₁Si₁.

### (Comparative Example 11)

### -Preparation of optical recording medium-

An optical recording medium of Comparative Example 11 was prepared in a manner similar to that described in Example 13 except that the composition of the recording layer was changed to In₁₆Sb₇₃Si₁₁.

### (Comparative Example 12)

### -Preparation of optical recording medium-

An optical recording medium of Comparative Example 12 was prepared in a manner similar to that described in Example 13 except that the composition of the recording layer was changed to In₁₃Sb₆₁Si₅Cu₂₁.

### <Initialization>

Initialization was performed in the following procedure: In PCR DISK INITIALIZER, an initializer manufactured by Hitachi Computer Peripherals Co., Ltd., each optical recording medium was rotated at a constant linear velocity and a laser beam with a power density of 10 mW/µm² to 30 mW/µm² was applied onto the optical recording medium while moving the laser beam at a constant speed in the radial direction of the optical recording medium.

### <Evaluations>

The initialized optical recording media were evaluated for signal characteristics, storage reliability, and the level of reduction in the reflectivity of the crystalline portions in the procedure described below. The results are shown in Table 2.

### <Evaluations of signal characteristics>

For each optical recording medium, repeated overwriting operations were conducted using EFM (8/14) random pattern at a recording density and recording power of 56 m/s or greater (38 mW), with the wavelength of a recording laser being set to 650 nm. The jitter of a 3T signal and the degree of modulation of a 14T signal were investigated to evaluate its reproduction signal characteristics.

### <Evaluation of storage reliability>

Storage reliability was evaluated in terms of the jitter of a 3T signal and the degree of modulation of a 14T signal, measured at the first overwriting operation after exposing the optical recording medium to high temperature and high humidity (85°C, 85RH%) for 100 hours.

### <Determination of level of reduction in the reflectivity of crystalline portions>

For each optical recording medium, the level of reduction in the reflectivity of crystalline portions was evaluated in terms of the difference in reflectivity between before and after a storage test, in which the optical recording medium is exposed to high temperature and high humidity (85°C, 85RH%) for 100 hours: Reflectivity difference (%) = (reflectivity (%) before storage test) - (reflectivity (%) after 100-hour storage test).

**Table 2**

| | Recording layer composition (at%) | Jitter after overwriting (%) | | Degree of modulation after overwriting (%) | | Storage reliability | | |
|---|---|---|---|---|---|---|---|---|
| | | 1 time | 1,000 times | 1 time | 1,000 times | Jitter (%) | Degree of modulation (%) | Reflectivity reduction (%) |
| Ex. 13 | In₁₇Sb₇₈Si₅ | 8.3 | 8.7 | 68 | 66 | 8.8 | 66 | 0.6 |
| Ex. 14 | In₁₈Sb₈₀Si₂ | 8.2 | 8.5 | 67 | 66 | 8.8 | 63 | 0.9 |
| Ex. 15 | In₁₈Sb₇₃Si₉ | 8.2 | 8.9 | 68 | 65 | 8.5 | 66 | 0.4 |
| Ex. 16 | In₁₀Sb₈₅Si₅ | 8.3 | 8.4 | 66 | 66 | 8.9 | 62 | 0.4 |
| Ex. 17 | In₂₄Sb₇₁Si₅ | 8.0 | 8.9 | 69 | 65 | 8.8 | 66 | 0.9 |
| Ex. 18 | In₁₆Sb₇₆Si₅Ge₃ | 8.3 | 8.6 | 67 | 66 | 8.5 | 66 | 0.6 |
| Ex. 19 | In₁₅Sb₇₅Si₅Ag₂Ge₃ | 8.0 | 8.2 | 68 | 67 | 8.2 | 67 | 0.4 |
| Ex. 20 | In₁₆Sb₇₆Si₅Al₃ | 8.4 | 8.6 | 69 | 68 | 8.6 | 68 | 0.6 |
| Ex. 21 | In₁₆Sb₇₆Si₄Mn₄ | 8.5 | 8.7 | 69 | 67 | 8.7 | 68 | 0.6 |
| Ex. 22 | In₁₅Sb₇₅Si₅Cu₅ | 8.6 | 8.8 | 69 | 68 | 8.8 | 68 | 0.5 |
| EX. 23 | In₁₆Sb₇₆Si₄Au₄ | 8.6 | 8.9 | 68 | 67 | 8.8 | 67 | 0.6 |
| EX. 24 | In₁₃Sb₆₇Si₅Cu₁₅ | 8.8 | 8.9 | 69 | 68 | 8.9 | 68 | 0.6 |
| Compara. Ex. 7 | In₂₁Sb₇₉ | 8.0 | 8.8 | 64 | 65 | 22 | 60 | 7.4 |
| Compara. Ex. 8 | In₂₈Sb₆₇Si₅ | 8.1 | 20 | 70 | 75 | 8.7 | 68 | 0.8 |
| Compara. Ex. 9 | In₉Sb₈₆Si₅ | 8.1 | 8.9 | 60 | 58 | 21 | 45 | 0.8 |
| Compara. Ex. 10 | In₁₈Sb₈₁Si₁ | 8.2 | 8.9 | 62 | 63 | 20 | 57 | 7.9 |
| Compara. Ex. 11 | In₁₆Sb₇₃Si₁₁ | 8.2 | 15 | 65 | 55 | 8.5 | 64 | 0.5 |
| Compara. Ex. 12 | In₁₃Sb₆₁Si₅Cu₂₁ | 8.8 | 18 | 65 | 60 | 9.0 | 62 | 0.5 |

The results represented in Table 2 show that sufficient degrees of modulation and sufficient overwriting characteristics are obtained in Examples 13 to 24, together with excellent storage reliability and less reflectivity reduction achieved by the addition of Si.

In contrast to Examples, reductions in jitter characteristics during the storage test are seen in Comparative Examples 7, 9 and 10, and the level of the reduction in reflectivity is large in Comparative Examples 7 and 10. Moreover, Comparative Examples 8, 11 and 12 show an increase in jitter after 1,000 cycles of overwriting operation, showing poor overwriting characteristics.

Poor storage reliability and great reduction in reflectivity seen in Comparative Example 7 may be due to lack of Si. Poor characteristics seen in Comparative Examples 8 and 12 may be attributed to the fact that the value of β/(α+β) ― the ratio Sb content to the total of In and Sb contents ― was outside the range of 0.73 to 0.90 (Comparative Examples 8 and 9), that the content of Si was outside the range of 2 atomic% to 10 atomic% (Comparative Examples 10 and 11), and that the content of Cu was greater than 20 atomic%

### (Comparative Example 12).

### (Production Example 2)

Upon formation of a recording layer in Example 13, Si chips having the same Si ratio as a desired recording layer composition were first placed on an InSb alloy target that has the same elemental ratio as the desired recording layer composition, followed by sputtering of the target. However, in this case, production of a recording layer having the desired composition was difficult; it failed to stably form a recording layer having a composition identical to that of a sputtering target that originally contains Si.

Accordingly, it is effective to originally use an alloy target having a composition identical to a desired recording layer composition in order to achieve stable formation of a recording layer having a composition identical to that of the sputtering target.

### Industrial Applicability

The optical recording medium of the present invention has as much a storage capacity as DVD-ROMs and is capable of achieving reliable recording over a wide recording speed range of 1.0x to over 16x on DVD (equivalent to recording linear velocities of about 3.5 m/s to over 56 m/s). In addition, the optical recording medium of the present invention can be widely applicable to various kinds of optical recording media, particularly to RW (ReWritable) discs such as CD-RW (Compact Disc ReWritable), DVD-RW (Digital Versatile Disc ReWritable), DVD+RW, DVD-RAM, and BD (Blu-ray Disc).

## Claims

1. An optical recording medium comprising:
a substrate;
a first protective layer;
a recording layer;
a second protective layer; and
a reflective layer,
the first protective layer, the recording layer, the second protective layer and the reflective layer being disposed on the substrate in this order or in reverse order,
wherein the recording layer comprises a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)).

2. The optical recording medium according to claim 1, wherein M represents at least one element selected from the group consisting of Ge, Al, Ag, Mn, Cu, Au and N.

3. The optical recording medium according to one of claims 1 and 2, wherein the recording layer comprises a composition expressed by the formula In_{α}Sb_{β}Si_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

4. The optical recording medium according to one of claims 1 and 2, wherein the recording layer comprises a composition expressed by the formula In_{α}Sb_{β}Cr_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

5. The optical recording medium according to any one of claims 1 to 4, wherein α and β satisfy the condition 0.80≤β/(α+β)≤0.90.

6. The optical recording medium according to any one of claims 1 to 5, wherein the recording layer performs at least one of recording, reproducing, erasing, and rewriting of information by reversibly changing between amorphous and crystalline phases by irradiation with an electromagnetic wave.

7. The optical recording medium according to any one of claims 1 to 6, wherein the crystallization temperature of the recording layer, measured at a heating rate of 10°C/min, is 150°C to 250°C.

8. The optical recording medium according to any one of claims 1 to 7, wherein the thickness of the recording layer is 8 nm to 22 nm.

9. The optical recording medium according to any one of claims 1 to 8, wherein the first protective layer and the second protective layer comprise a mixture of ZnS and SiO₂.

10. The optical recording medium according to any one of claims 1 to 9, wherein the reflective layer comprises one of Ag and an Ag alloy.

11. The optical recording medium according to claim 10, wherein a third protective layer, which is free of sulfur, is disposed between the second protective layer and the reflective layer.

12. The optical recording medium according to claim 11, wherein the third protective layer comprises at least one of SiC and Si.

13. The optical recording medium according to one of claims 11 and 12, wherein the thickness of the third protective layer is 2 nm to 20 nm.

14. The optical recording medium according to any one of claims 1 to 13, which is capable of recording at recording linear velocities of 3.5 m/s to 56 m/s or faster.

15. A sputtering target comprising:
a composition expressed by the formula In_{α}Sb_{β}A_{γ}M_{δ} (where A represents one of Si and Cr, M represents at least one element selected from the group consisting of elements other than In, Sb, Si and Cr, and mixtures of the elements other than other than In, Sb, Si and Cr, and α, β, γ and δ represent atomic% of their respective elements (where 0.73≤β/(α+β)≤0.90, 2≤γ≤10, 0≤δ≤20, and (α + β + γ +δ) = 100)),
wherein the sputtering target is used for production of a recording layer.

16. The sputtering target according to claim 15, wherein M represents at least one element selected from the group consisting of Ge, Al, Ag, Mn, Cu, Au and N.

17. The sputtering target according to one of claims 15 and 16, comprising:
a composition expressed by the formula In_{α}Sb_{β}Si_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

18. The sputtering target according to one of claims 15 and 16, comprising:
a composition expressed by the formula In_{α}Sb_{β}Cr_{γ}M_{δ} (where M represents at least one element selected from the group consisting of Ge, Al, Ag, Mn, Cu, Au and N, and α, β, γ and δ represent atomic% of their respective elements (where 0.73≤β/(α+β)≤0.90, 2≤γ≤10, 0≤δ≤20, and (α + β + γ +δ) = 100)).

19. The sputtering target according to any one of claims 15 to 18, wherein α and β satisfy the condition 0.80≤β/(α+β)≤0.90.

20. A method for manufacturing an optical recording medium, comprising:
forming a recording layer with a sputtering method using a sputtering target according to any one of claims 15 to 19,
wherein the optical recording medium comprises:
a substrate;
a first protective layer;
a recording layer;
a second protective layer; and
a reflective layer,
the first protective layer, the recording layer, the second protective layer and the reflective layer being disposed on the substrate in this order or in reverse order.

21. A method for the use of an optical recording medium, comprising:
applying a laser beam to an optical recording medium according to any one of claims 1 to 14 from the first protective layer side to thereby perform at least one of recording, reproducing, erasing, and rewriting of information.

22. An optical recording and/or reproducing apparatus for applying a laser beam from a laser source to an optical recording medium to thereby at least record or reproduce information on or from the optical recording medium,
wherein the optical recording medium is an optical recording medium according to any one of claims 1 to 14.
